# EUROPEAN PATENT APPLICATION

(11) **EP 4 760 880 A1**
(43) Date of publication of application: **17.06.2026**
(21) Application number: 24851522.3
(22) Date of filing: 11.07.2024
(51) Int. Cl.: H01M 10/6557, H01M 10/613, H01M 10/6554, H01M 10/6555, H01M 50/204

(54) **BATTERY AND BUFFER SHEET**

(30) Priority: 08.08.2023 JP 2023129130
(71) Applicant: NOK Corporation, Minato-ku, Tokyo 105-8585 (JP)
(72) Inventor: KAWAGOE, Yuki, Aso-shi, Kumamoto 869-2231 (JP)
(74) Representative: TBK
(86) International application number: PCT/JP2024/025179
(87) International publication number: WO 2025/033093

(57) **Abstract**

A battery including: a plurality of cells, a plurality of buffer sheets 100 each disposed between respective adjacent cells, and a coolant passage for allowing a coolant to flow through a region where the buffer sheet 100 is disposed between adjacent cells, wherein the buffer sheet 100 includes a flat plate part 110, a plurality of protrusions 120 protruding from both sides of the flat plate part 110, and a plurality of through holes 130 provided so as to penetrate both sides of the flat plate part 110.

## Description

### [Technical Field]

The present invention relates to a battery and a buffer sheet.

### [Background Art]

Batteries such as lithium ion batteries and all-solid-state batteries are commonly configured as cell stacks, in which a plurality of cells are stacked, to obtain the required battery capacity and voltage. In these batteries, the cells may expand or contract during charging and discharging, which may lead to a decrease in quality. For example, a problem associated with lithium ion batteries is the generation of needle-shaped crystals (dendrites) of lithium metal that occurs in repeated charging and discharging. When these crystals continue to grow, the crystals may cause a short circuit between positive and negative electrodes. In addition, in the case of all-solid-state batteries, it is known that the variation in surface pressure caused by expansion and contraction leads to variation in performance and also affects the service life. Therefore, measures have been taken to suppress cell expansion by pressing the cells with an appropriate force, and to mechanically suppress the growth of the above-mentioned crystals in lithium ion batteries. For example, a technique is known in which a buffer sheet is placed between adjacent cells.

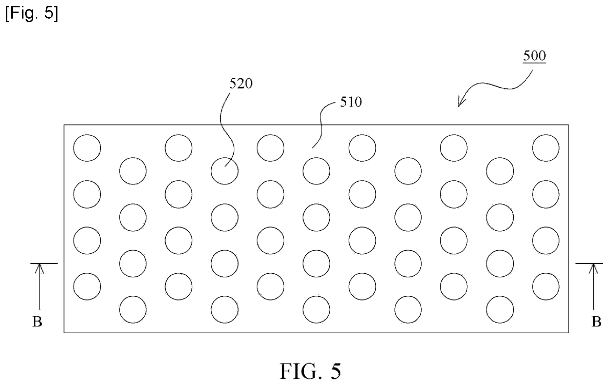

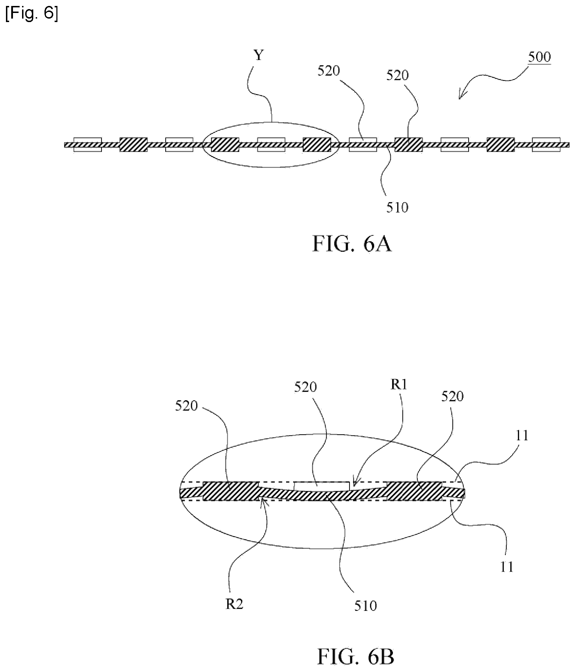

Furthermore, the size and power output of the above-described batteries have been increasing, and in order to suppress deterioration of the cells, it is becoming increasingly necessary to suppress temperature rise due to the increase in heat generation. Accordingly, techniques for providing a structure for flowing a coolant between adjacent cells have been studied. However, when a general buffer sheet is used to create a structure in which a coolant flows in the region where the buffer sheet is arranged, it is believed that a stable cooling effect cannot be obtained. This point will be explained with reference to Figs. 5 and 6.

Fig. 5 is a plan view of a buffer sheet according to the related art. Fig. 6 is a schematic cross-sectional view of the buffer sheet according to the related art. Fig. 6A is a cross-sectional view taken along line BB in Fig. 5, and Fig. 6B is an enlarged view of the region surrounded by Y in Fig. 6A when a coolant flows in the region where the buffer sheet according to the related art is arranged.

The buffer sheet 500 according to the related art has a flat plate part 510 and a plurality of protrusions 520 protruding from both sides of the flat plate part 510. When the buffer sheet 500 is placed between adjacent cells and a coolant flows between the cells, the coolant flows in the space formed in the regions where the protrusions 520 are not provided. However, depending on the usage environment, the flat plate part 510 may bend. This causes a difference between the surface area of the flow path formed on one side of the flat plate part 510 and the surface area of the flow path formed on the other side of the flat plate part 510, resulting in a difference in cooling performance between both sides. In particular, when a plurality of cells are stacked vertically, the flat plate part 510 is greatly bent.

Fig. 6B shows the state of the buffer sheet 500 when the plurality of cells are stacked vertically and a coolant flows between the cells. In this figure, the position of the surface of the cell is indicated by a dotted line 11. As shown in this figure, as a result of the flat plate part 510 being bent downward, the flow path area of a flow path R1 formed on the upper surface side of the flat plate part 510 becomes wider, while the flow path area of a flow path R2 formed on the lower surface side becomes narrower. Therefore, there is a difference in cooling performance between both sides of the flat plate part 510.

### [Citation List]

### [Patent Literature]

[PTL 1]
   WO 2020/004039
[PTL 2]
   WO 2020/166357
[PTL 3]
   WO 2022/004076

### [Summary of Invention]

### [Technical Problem]

The present invention provides a battery and a buffer sheet capable of suppressing cell deterioration.

### [Solution to Problem]

The present invention employs the following means to solve the above problem.

That is, the battery of the present invention includes:
a plurality of cells;
a plurality of buffer sheets each disposed between respective adjacent cells; and
a coolant passage for allowing a coolant to flow through a region where the buffer sheet is disposed between adjacent cells, wherein
the buffer sheet includes:
   a flat plate part;
   a plurality of protrusions protruding from both sides of the flat plate part; and
   a plurality of through holes provided so as to penetrate both sides of the flat plate part.

Furthermore, the buffer sheet of the present invention is disposed between adjacent cells in a battery configured so that a coolant flows between the adjacent cells, and comprises:
a flat plate part;
a plurality of protrusions protruding from both sides of the flat plate part; and
a plurality of through holes provided so as to penetrate both sides of the flat plate part.

According to the present invention, since the plurality of through holes are provided in the buffer sheet, the coolant can move between a flow path formed on one side of the flat plate part and a flow path formed on the other side. Furthermore, the amount of bending of the flat plate part can be suppressed correspondingly to the number of provided through holes.

The plurality of protrusions may be arranged side by side along the direction in which the coolant flows, and be arranged in a plurality of rows.

As a result, the flow of the coolant is unlikely to be impeded by the protrusions.

The through holes may be arranged in a plurality of rows so as to extend in the direction in which the coolant flows.

As a result, the amount of bending of the flat plate part can be suppressed more reliably, thereby suppressing the difference in the flow path area between both sides of the flat plate part caused by the bending of the flat plate part.

The above features may be combined without any limitation. Advantageous Effects of Invention

As explained above, according to the present invention, cell deterioration can be suppressed.

### Brief Description of Drawings

[Fig. 1]

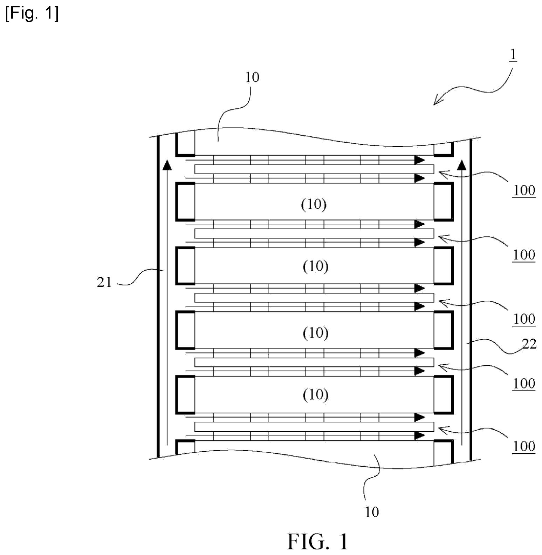

   Fig. 1 is a schematic diagram of a battery according to the present example.
[Fig. 2]

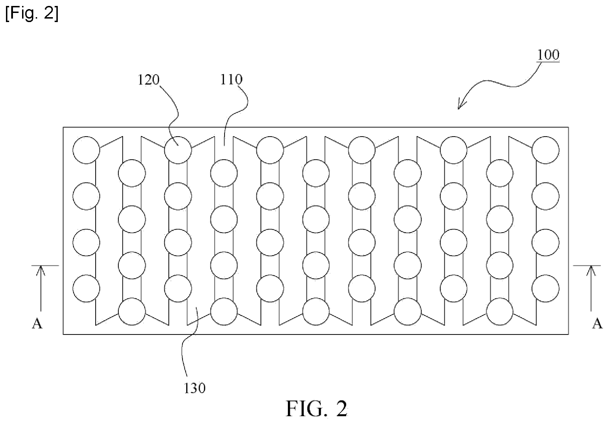

   Fig. 2 is a plan view of a buffer sheet according to the example of the present invention.
[Fig. 3]

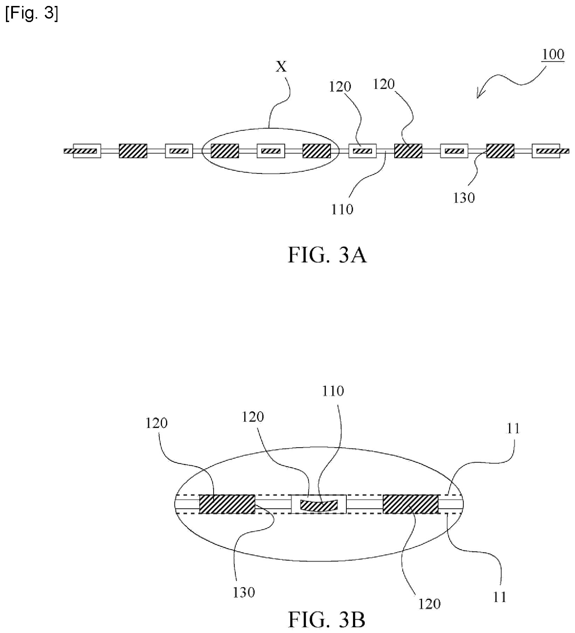

   Fig. 3 is a schematic cross-sectional view of the buffer sheet according to the example of the present invention.
[Fig. 4]

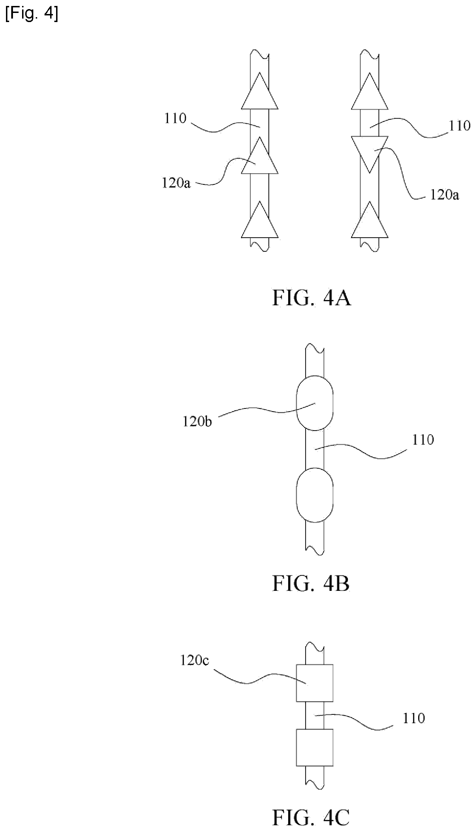

   Fig. 4 is a diagram showing various examples of shapes of protrusions.
[Fig. 5]
   Fig. 5 is a plan view of a buffer sheet according to the related art.
[Fig. 6]
   Fig. 6 is a schematic cross-sectional view of the buffer sheet according to the related art.

### [Description of Embodiments]

The mode for carrying out the invention will be described in detail hereinbelow based on the examples and with reference to the drawings. However, the dimensions, materials, shapes, and relative positions of the components described in this example are not intended to limit the scope of the invention to those alone, unless otherwise specified.

### (Example)

A battery and a buffer sheet according to an example of the present invention will be described with reference to Figs. 1 to 3. Fig. 1 is a schematic diagram of a battery according to the present example and shows a part of the battery. Fig. 2 is a plan view of a buffer sheet according to the example of the present invention. Fig. 3 is a schematic cross-sectional view of the buffer sheet according to the example of the present invention. Fig. 3A is a cross-sectional view taken along line AA in Fig. 2, and Fig. 3B is an enlarged view of the part surrounded by X in Fig. 3A when a coolant flows in the region where the buffer sheet according to the present example is arranged.

### <Battery>

A battery 1 according to the example of the present invention will be described with reference to Fig. 1. The battery 1 is composed of a cell stack in which a plurality of cells (single cells) 10 is stacked. Specific examples of the battery 1 according to present example include secondary batteries such as lithium ion batteries and all-solid-state batteries. The cell stack in such a battery is generally compressed by a pair of clamping plates or the like. As a result, a predetermined compressive force is applied to the cell stack. In the battery 1 according to the present example, a buffer sheet 100 is disposed between two adjacent cells 10. In this manner, the cell stack according to the present example includes a plurality of cells 10 and a plurality of buffer sheets 100 disposed between the adjacent cells 10. By providing the buffer sheets 100 in this manner, it is possible to apply an appropriate pressing force to each of the cells 10 even if the cells 10 expand and contract due to charging and discharging. This makes it possible to suppress deterioration of the battery 1 and extend the life of the battery 1. The buffer sheet 100 is an elastic body made of an elastomer material such as rubber.

The battery 1 according to present example is provided with coolant passages for allowing a coolant to flow so as to pass through the regions between the adjacent cells 10 where the buffer sheets 100 are arranged. These coolant passages are provided on both sides in the width direction of the cell stack. For convenience, the coolant passage on the left side in Fig. 1 is called a first passage 21, and the coolant passage on the right side is called a second passage 22. In Fig. 1, the cross section of the walls forming the first passage 21 and the second passage 22 are shown by thick lines.

In the present example, the cells 10 are used in a state where they are stacked vertically. The configuration is such that in the first passage 21, the coolant flows vertically from the bottom to the top. While the coolant flowing in the first passage 21 flows upward, a part thereof passes between adjacent cells 10 and flows into the second passage 22. The coolant that has flowed into the second passage 22 flows vertically from the bottom to the top in the second passage 22.

As the coolant, a cooling liquid such as cooling oil can be suitably used. The conventional drive source (such as a pump) for causing the coolant to flow, valve etc. for allowing the coolant to flow in a desired direction, and sealing structure, sealing device, etc. for preventing leakage of the coolant can be used as appropriate, and a description thereof will be omitted. In short, a configuration may be used that allows the coolant to flow in the region where the buffer sheet 100 is arranged between adjacent cells 10.

### <Buffer Sheet>

The buffer sheet 100 according to present example will be described with reference to Figs. 2 and 3 in particular. The buffer sheets 100 according to present example are incorporated in the battery 1 and used so that the coolant flows in the vertical direction (from top to bottom or from bottom to top) in Fig. 2. The buffer sheet 100 has a flat plate part 110, a plurality of protrusions 120 protruding from both sides of the flat plate part 110, and a plurality of through holes 130 provided so as to penetrate both sides of the flat plate part 110.

As shown in the figure, the protrusions 120 are arranged side by side in groups along the direction in which the coolant flows, and are arranged in a plurality of rows. In the example shown in the figure, the protrusions 120 are arranged side by side in groups of four along the direction in which the coolant flows, and are arranged in eleven rows. The through holes 130 extend along the direction in which the coolant flows, and are arranged in a plurality of rows. In the example shown in the figure, the through holes 130 are arranged in ten rows.

### <Advantages of Battery and Buffer Sheet According to Present Example>

According to the present example, the buffer sheet 100 is provided with a plurality of through holes 130, so that the coolant can move between the flow path formed on one side of the flat plate part 110 and the flow path formed on the other side. In addition, the amount of bending of the flat plate part 110 can be suppressed correspondingly to the number of provided through holes 130.

In the present example, the configuration is adopted in which the plurality of protrusions 120 are arranged side by side in groups along the direction in which the coolant flows, and are arranged in a plurality of rows. As a result, the flow of the coolant is unlikely to be impeded by the protrusions 120.

Furthermore, the configuration is adopted in which the through holes 130 are arranged in a plurality of rows so as to extend in the direction in which the coolant flows. This makes it possible to suppress the difference in flow path area between both sides of the flat plate part caused by the bending of the flat plate part 110. This point will be explained with particular reference to Fig. 3B. This figure shows the state of the buffer sheet 100 when a plurality of cells 10 are stacked vertically and a coolant flows between the cells 10. In this figure, the position of the surface of the cell is indicated by a dotted line 11.

In the present example, as a result of arranging the protrusions 120 and the through holes 130 as described above, the flat plate part 110 is configured of outer frame portions along the four sides and portions that connect the protrusions 120 along the direction in which the coolant flows, as shown in Fig. 2. Therefore, since both sides of the portions of the flat plate part 110 that connect the protrusions 120 are made empty by the through holes 130, even if the portions are bent, the bending amount is small (see Fig. 3B). As a result, the difference in the flow path area between both sides of the flat plate part 110 can be suppressed.

As described above, the difference in the flow path area between both sides of the flat plate part 110 can be suppressed, which in combination with the fact that the through holes 130 allow the coolant to move freely to both sides of the flat plate part 110, also suppresses the occurrence of a temperature difference in the coolant flowing between both sides of the flat plate part 110. This allows the cooling performance to be equal on both sides of the flat plate part 110, and a stable cooling effect can be obtained. Therefore, the combination of the moderate pressing force applied to the cells 10 by the buffer sheet 100 and the stable cooling effect effectively suppresses the deterioration of the cells 10.

### (Other)

In the above embodiment, the protrusions 120 are cylindrical, but the shape of the protrusions in the present invention is not particularly limited. With reference to Fig. 4, an example of the shape of the protrusion will be described. Fig. 4 shows a part near the protrusions in a plan view. For example, as shown in Fig. 4A, a triangular prism-shaped protrusion 120a can be adopted. The triangles may all be oriented to face the same direction as shown on the left side of the figure, or may be arranged so that the orientations are different as shown on the right side. Also, as shown in Fig. 4B, a protrusion 120b with an oval planar shape can be adopted. Furthermore, as shown in Fig. 4C, a square prism-shaped protrusion 120c can be adopted. Thus, the protrusions can have various shapes.

### [Reference Signs List]

- 1: Battery
- 10: Cell
- 21: First passage
- 22: Second passage
- 100: Buffer sheet
- 110: Flat plate part
- 120, 120a, 120b, 120c: Protrusion
- 130: Through hole

## Claims

1. A battery comprising:
a plurality of cells;
a plurality of buffer sheets each disposed between respective adjacent cells; and
a coolant passage for allowing a coolant to flow through a region where the buffer sheet is disposed between adjacent cells, wherein
the buffer sheet includes:
a flat plate part;
a plurality of protrusions protruding from both sides of the flat plate part; and
a plurality of through holes provided so as to penetrate both sides of the flat plate part.

2. The battery according to claim 1, wherein the plurality of protrusions are arranged side by side along a direction in which the coolant flows, and are arranged in a plurality of rows.

3. The battery according to claim 1 or 2, wherein the through holes are arranged in a plurality of rows so as to extend in a direction in which the coolant flows.

4. A buffer sheet disposed between adjacent cells in a battery configured so that a coolant flows between the adjacent cells, the buffer sheet comprising:
a flat plate part;
a plurality of protrusions protruding from both sides of the flat plate part; and
a plurality of through holes provided so as to penetrate both sides of the flat plate part.

5. The buffer sheet according to claim 4, wherein the plurality of protrusions are arranged side by side along a direction in which the coolant flows, and are arranged in a plurality of rows.

6. The buffer sheet according to claim 4 or 5, wherein the through holes are arranged in a plurality of rows so as to extend in a direction in which the coolant flows.
